# EUROPÄISCHE PATENTANMELDUNG

(11) **EP 0 571 837 A1**
(43) Veröffentlichungstag der Anmeldung: **01.12.1993**
(21) Anmeldenummer: 93107856.2
(22) Anmeldetag: 14.05.1993
(51) Int. Cl.: A01C 9/02

(54) **Kartoffellegemaschine mit Schöpfkette**

(30) Priorität: 29.05.1992 DE 4217828
(71) Anmelder: Cramer Technik GmbH, W-2950 Leer (DE)
(72) Erfinder: Cramer, Lüppo, W-2950 Leer (DE); Cramer, Ewert, W-2950 Leer (DE)
(74) Vertreter: Habbel, Hans-Georg, Dipl.-Ing.

(57) **Zusammenfassung**

Die Erfindung bezieht sich auf eine Schöpfrinne (1) für Kartoffellegemaschinen mit einem Begrenzungsmittel (10,11), durch welches die Schöpfrinnenlänge reguliert werden kann, wobei aber dieses Begrenzungsmittel (10,11) am freien Ende der Schöpfrinne (1) zum Becher hin zwecks Verkleinerung der wirksamen Schöpfrinnenlänge verstellt wird.

## Beschreibung

Die Erfindung bezieht sich auf Legeorgane für eine Kartoffellegemaschine gemäß dem Oberbegriff des Hauptanspruches.

Eine gattungsbildende Einrichtung wird in der DE-PS 26 26 228 beschrieben, wobei hier die die Schöpfrinnenlänge regulierenden Begrenzungsmittel als Näpfe ausgebildet sind, die ausgehend von einem Bereich nahe der Schöpfkette in vom freien Ende der Schöpfrinne unterschiedlichen Abständen angeordnet werden können. Durch dieses Verkleinern der wirksamen Schöpfrinnenlänge wird erreicht, daß nicht so viel kleinere Kartoffeln aufgenommen werden und damit auch nicht so viel kleinere Kartoffeln wieder ausgekippt werden, die dann ihren Weg zum Vorratsbehälter und durch das Schöpfwerk der Wahrscheinlichkeit entsprechend häufig durchwandern, ehe sie von einem entsprechenden Becher aufgenommen werden. Empfindliche Kartoffeln, insbesondere solche mit Keimen, können dadurch Schaden erleiden, und es wird auch von dem Landwirt als sehr störend empfunden, daß die Legefrequenz, d. h. die Geschwindigkeit, mit der der Landwirt pflanzen kann, reduziert wird, da zu viele Kartoffeln zurückfließen müssen und oft auch bei hoher Legefrequenz sich gar nicht vom Becher lösen und in den Schacht hineinfallen und damit als doppelte Kartoffeln gepflanzt werden.

Bei der bekannten Einrichtung wird dadurch, daß die Näpfe im Bereich der Schöpfkette in vom freien Ende der Schöpfrinne unterschiedlichen Abständen angeordnet sind, bewirkt, daß die vom Schöpforgan dann wirksam getragene Kartoffel, die auch gelegt werden soll, nahe am freien Ende der Schöpfrinne liegt.

Es ist aber allgemein bekannt, daß das Drehmoment für einen Drehpunkt das Vektorprodukt aus der Kraft und dem Abstand ihres Angriffspunktes vom Drehpunkt ist. Das heißt, je näher die Kartoffel zum freien Ende der Schöpfrinne hin gelagert ist, um so größer ist beim Umlauf der Schöpfkette um die jeweiligen oberen Umlenkräder das Drehmoment, so daß die Kartoffel beim Umlauf um die Umlenkrolle aus der Schöpfrinne herausgeschleudert wird. Dieser Nachteil kann dadurch vermieden werden, daß die Maschine relativ langsam fährt, d.h. also die Umlaufgeschwindigkeit der Schöpfrinne um die Umlenkrolle relativ gering ist.

Das Herausschleudern der Kartoffeln führt zu Fehlbelegungen, und das langsame Fahren der Maschine ist nachteilig, da natürlich der Landwirt bestrebt ist, möglichst viele Kartoffeln in der Zeiteinheit zu legen.

Der Erfindung liegt daher die Aufgabe zugrunde, die gattungsbildende Einrichtung dahingehend zu verbessern, daß auch bei einer Verringerung der wirksamen Schöpfrinnenlänge kein erhöhtes Drehmoment auftritt, d. h. kein Herausschleudern der Kartoffeln erfolgen kann.

Diese der Erfindung zugrundeliegende Aufgabe wird durch die kennzeichnenden Merkmale des Hauptanspruches gelöst.

Vorteilhafte Ausgestaltungen sind in dem Unteranspruch erläutert.

Mit anderen Worten ausgedrückt schlägt die Erfindung vor - vorzugsweise stufenlos - die wirksame Schöpfrinnenlänge durch entsprechende Begrenzungsmittel zu regulieren, wobei aber nicht wie im Stand der Technik die Regulierung dadurch erfolgt, daß der für die Kartoffel bestimmte Aufnahmeraum der Schöpfrinne nach vorne verlagert wird, sondern der für die Kartoffel bestimmte wirksame Aufnahmeraum wird nach hinten zum Becher hin verlagert, so daß also die Kartoffel relativ nahe am Drehpunkt gelagert ist.

Das Begrenzungsmittel kann aus einem einfachen Kunststoff- oder Blechteil bestehen, das in der Schöpfrinne verschiebbar ist, es braucht also nicht wie im Stand der Technik ein aus Kunststoff bestehender zusätzlicher Becher eingesetzt zu werden, so daß also das erfindungsgemäße Mittel außer dem erzielten technischen Vorteil auch noch sehr kostengünstig herzustellen ist.

Ein Ausführungsbeispiel der Erfindung wird nachfol - gend anhand der Zeichnung erläutert. Die Zeichnung zeigt dabei in
- Fig. 1: schematisch eine Kartoffellegemaschine, in
- Fig. 2: eine Schöpfrinne mit Becher, aber ohne Begrenzungsmittel, in
- Fig. 3: die Schöpfrinne gemäß Fig. 2 mit eingesetztem Begrenzungsmittel am vorderen freien Ende und in
- Fig. 4: die Schöpfrinne gemäß Fig. 2 und 3 mit verstelltem Begrenzungsmittel.

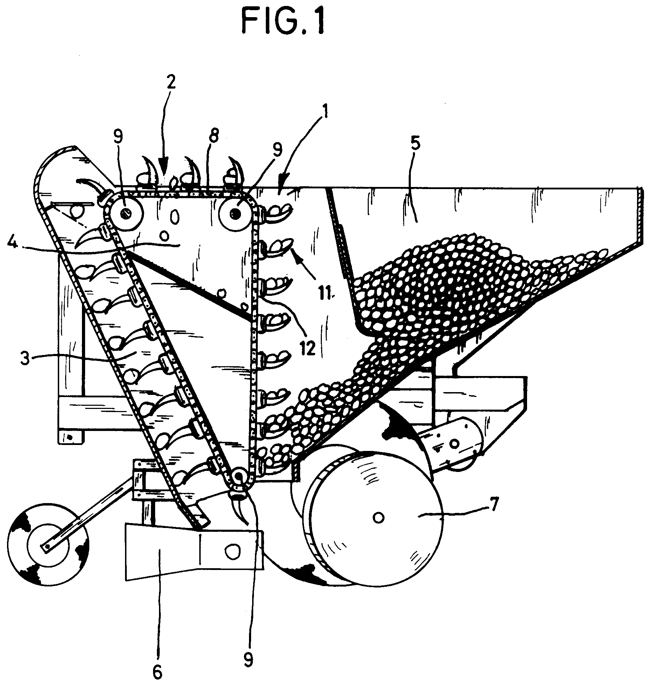

In Fig. 1 ist eine Kartoffellegemaschine dargestellt. Diese weist eine Vielzahl von Schöpfrinnen auf, die unter Zwischenschaltung eines Bechers 12 an eine Schöpfkette 8 anschließen. Die Schöpfkette 8 wird über obere Umlenkrollen 9 und eine untere Umlenkrolle 9 geführt und durchläuft dabei einen Vorratsbehälter 5, von dem aus sie Kartoffeln aufnehmen kann. Während im Bereich des Vorratsbehälters die Schöpfrinnen 1 im wesentlichen horizontal ausgerichtet sind und dabei also auch zwei oder noch mehr Kartoffeln aufnehmen können, liegen diese Schöpfrinnen im Vereinzelungsbereich 2 vertikal, so daß die überflüssige Kartoffel abgeworfen wird, während sich die zu legende Kartoffel in den Becher 12 und den zugehörigen Teil der Schöpfrinne einlegt. Im Legeschacht 3 wird dann die Kartoffel abgeworfen und nach unten geführt, während die überzähligen Kartoffeln über einen Rücklauf 4 zum Vorratsbehälter 5 zurückgeleitet werden. Im unteren Bereich der Maschine sind ein Furchenschar 6 und die Zudeckscheiben 7 erkennbar.

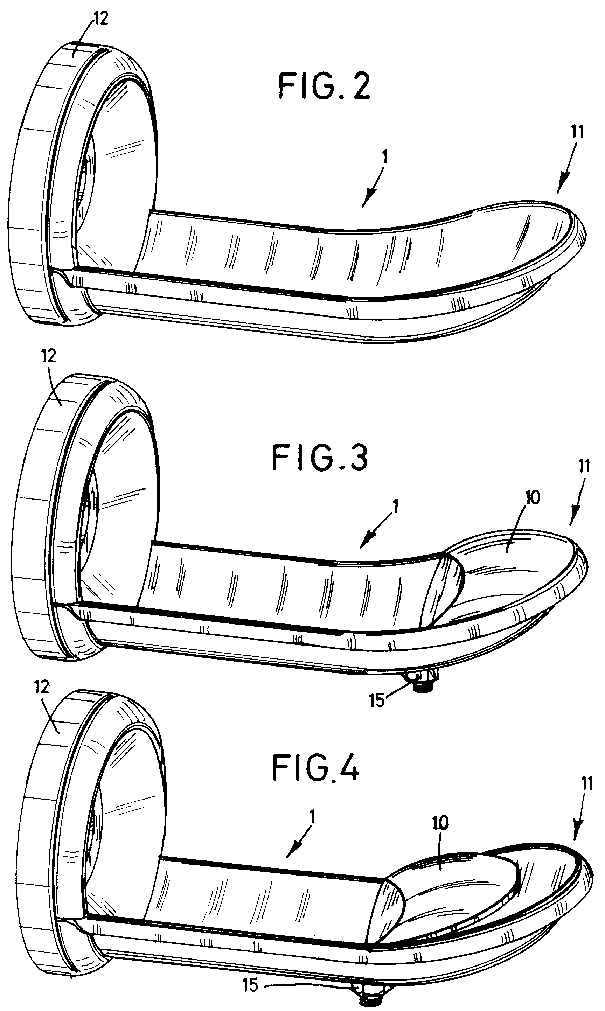

In den Fig. 2 und 3 sind Legeorgane in größerem Maßstab erkennbar. Diese Legeorgane bestehen aus einer Schöpfrinne 1 und einem Becher 12, wobei der Becher 12 an die Schöpfkette 8 anschließt. Um die wirksame Länge und damit Aufnahmegröße der Schöpfrinne 1 zu begrenzen, ist gemäß der Darstellung in Fig. 3 im vorderen freien Endbereich der Schöpfrinne 1 ein Begrenzungsmittel 10 angeordnet, das, wie dies Fig. 4 verdeutlicht, auf den Becher 12 zu in Längsachse der Schöpfrinne 1 verstellt werden kann. Die Verstellung kann dabei durch einfache Schraubmittel 15 erfolgen, wobei aber auch hier alle anderen bekannten entsprechenden Mittel eingesetzt werden können.

Aus dieser Darstellung in den Fig. 2 bis 4 ist erkennbar, daß dann, wenn die wirksame Schöpfrinnenlänge begrenzt wird, die Begrenzung nach hinten zum Becher 12 hin erfolgt, d. h. also die Kartoffel bleibt unabhängig von ihrer Größe immer nahe im Bereich des an die Schöpfkette 8 anschließenden Bechers 12 liegen und wird nicht wie im Stand der Technik nach vorne zum freien Ende 11 der Schöpfrinne hin verlagert. Durch die erfindungsgemäße Gestaltung wird also kein erhöhtes Drehmoment bei Verkleinerung der wirksamen Schöpfrinnenlänge bedingt.

## Patentansprüche

1. An der Schöpfkette (8) einer Kartoffellegemaschine befestigte Legeorgane mit von der Schöpfkette (8) abstehenden, mittels eines Bechers (12) an die Schöpfkette (8) anschließenden, muldenförmigen Schöpfrinnen (1) von solcher Länge, daß sie mehrere kleinere Kartoffeln gleichzeitig aufnehmen können und mit zum Legen unterschiedlicher Kartoffelgrößen parallel zur Längserstreckung der Schöpfrinne (1) verstellbaren Begrenzungsmitteln (10), dadurch gekennzeichnet, daß die die wirksame Schöpfrinnenlänge regulierenden Begrenzungsmittel (10) im Bereich des freien Endes (11) der Schöpfrinne (8) angeordnet sind und auf den Becher (12) zu verstellbar sind.

2. Vorrichtung nach Anspruch 1, dadurch gekennzeichnet, daß die Verstellung des Begrenzungsmittels (10) stufenlos erfolgt.
